# EUROPEAN PATENT SPECIFICATION

(11) **EP 3 889 975 B1**
(45) Date of publication and mention of the grant of the patent: **28.12.2022**
(21) Application number: 20207391.2
(22) Date of filing: 13.11.2020
(51) Int. Cl.: H01C 7/112, H01C 7/12, H01H 37/08, H01H 9/16, H01H 9/32, H01H 37/76, H01H 83/10, H01T 1/12, H01T 1/14, H01T 4/04

(54) **SPD PLUG-IN MODULE, SPD BASE AND PLUG-IN SPD**
SPD-STECKMODUL, SPD-SOCKEL UND SPD-STECKVERBINDER
MODULE ENFICHABLE SPD, BASE SPD ET SPD ENFICHABLE

(30) Priority: 30.03.2020 CN 202010237699
(43) Date of publication of application: 06.10.2021
(73) Proprietor: Longke Electronics (Huiyang) Co., Ltd., Huizhou City, Guangdong Province 516221 (CN)
(72) Inventor: TSENG, Chinglung, Zhunan Town, Miaoli County, Taiwan 35010 (CN); CHEN, Zetong, Huizhou City, Guangdong Province 516221 (CN)
(74) Representative: Meyer, Thorsten

(56) References cited:
- EP-A1- 3 422 370
- WO-A1-2007/017736
- WO-A1-2007/093572
- CN-A- 108 933 066
- DE-B3-102015 000 329

## Description

### TECHNICAL FIELD

The present invention relates to the field of surge protective devices, and specifically discloses an SPD plug-in module, an SPD base and a plug-in SPD.

### BACKGROUND

A voltage-limiting surge protective device (SPD) is mainly assembled by passive electronic components, chips of metal oxide varistors (MOV, zinc oxide varistors), and has a special nonlinear volt-ampere characteristic, that is, a nonlinear relationship between current and voltage, which is generally characterized by a nonlinearity parameter. In the case of abnormal conditions, such as lightning strikes, electromagnetic field interference, frequent switching of power supply, power system failures, or the like, the voltage on the line increases suddenly and exceeds the conduction voltage of an SPD, the SPD will enter the conduction zone. In this case, the nonlinearity parameter can reach tens or hundreds, and the impedance of the SPD will be low, only a few ohms, so that the overvoltage will form a surge current to flow out, thereby protecting connected electronic products or expensive components.

At present, a plug-in SPD is mainly composed of a plug-in base and a plug-in module. The plug-in module is mainly used to install the SPD chip, and the plug-in base is mainly used to connect to the power line. When abnormal conditions occur, the SPD chip and its electrode pins are separated, and the plug-in module needs to be replaced. At present, there are still some problems in the current plug-in modules and plug-in bases, such as inaccurate and unreliable in physical design, difficult in assembly, and error-prone during assembly, affected abilities of the MOV chip by unreasonable structure, and high overall costs.

European patent application EP3422370A1 disclosed a release mechanism for surge protectors includes a first electrical connection pin soldered with a varistor's second electrode, a function rotating member sheathed on a fixed column and installed between a varistor and a bridge bracket, an elastic driving device fixed to an internal box body, a bridge bracket fixed to a second electrical connection pin in the internal box body. If the varistor is not released, then the bridge bracket will be passed through a soldering window and soldered with a varistor's first electrode, or else the elastic driving device will drive the function rotating member to rotate around the fixed column. An arc shield plate exposed from the failure status indicating area for triggering a remote linkage rod shields the bridge bracket and electrode.

### SUMMARY

The present application provides an SPD plug-in module, an SPD base and a plug-in SPD, and solves the technical problems in the current plug-in SPDs: inaccurate and unreliable in physical design, difficult in assemble, and error-prone during assembly, affected abilities of the MOV chip by unreasonable structure, and high overall costs.

In order to solve the above technical problems, the present invention provides an SPD plug-in module which includes:
a rectangular outer shell with a bottom opening; and
an internal assembly drawn into the rectangular outer shell from the bottom opening of the rectangular outer shell, the internal assembly includes an inner shell as well as an SPD chip structure and a thermal disconnection structure fixed to the inner shell;
the SPD chip structure is provided with a non-tripping electrode pin and a tripping electrode pin which are respectively fixed to lower middle portions of left and right side surfaces of the inner shell and extend out of a bottom surface of the inner shell;
upper portions of two side surfaces of the rectangular outer shell are each provided with an anti-skid structure, lower portions of the two side surfaces are each provided with an internal assembly fixing structure, and an inner side of one side surface of the rectangular outer shell is provided with a mis-installation-proof structure; and a first plugging locking structure and a first guiding plugging structure are provided below the anti-skid structure;
lower portions of two side surfaces of the inner shell are each provided with an internal assembly clasping structure that matches and assembles with the internal assembly fixing structure, and an upper portion of one side surface of the inner shell is provided with a mis-installation-proof matching structure that matches with the mis-installation-proof structure;
a window is also embedded in a top surface of the rectangular outer shell;
a bottom surface of the inner shell is also provided with a first through hole which directly faces an alarm bump at a bottom of the thermal disconnection structure;
the anti-skid structure is configured as a rough surface;
the first plugging locking structure is configured as a horizontal groove arranged under the rough surface;
the first guiding plugging structures extend upward from a lower portion of the two side surfaces of the rectangular outer shell, and include at least two vertical grooves with the same or different heights; a bottom surface of the internal assembly is provided with an identification structure which is configured as an identification pile arranged at a bottom of the inner shell;
the internal assembly fixing structure is configured as a clasping hole, and the internal assembly clasping structure is configured as a clasp which is embedded in the clasping hole;
the mis-installation-proof structure is configured as a mis-installation-proof short protrusion, the mis-installation-proof matching structure is configured as a notch that matches with the mis-installation-proof short protrusion; and
the non-tripping electrode pin and the tripping electrode pin are respectively provided with a second through hole and a third through hole, and the clasp passes through the second through hole and the third through hole and then is clasped in the clasping hole.
The present invention also provides an SPD base which matches the aforementioned SPD plug-in module, the SPD base includes:
a lower bottom shell formed integrally;
an upper bottom shell formed integrally and covered on the lower bottom shell, the upper bottom shell includes a left column, a right column and a transverse bridge connected between the left column and the right column; the left column, the transverse bridge and the lower bottom shell being defined by each other to form a first preset placement space; the right column, the transverse bridge and the lower bottom shell being defined by each other to form a second preset placement space; and the transverse bridge and the lower bottom shell being defined by each other to form a third preset placement space;
a first wiring assembly installed in the first preset placement space, suitable for establishing an electrical connection between an electrode pin of a SPD plug-in module and an external power line;
a second wiring assembly installed in the second preset placement space, suitable for establishing an electrical connection between another electrode pin of the SPD plug-in module and an external power line; and
an alarm component installed in the third preset placement space;
left and right sides of a top surface of the transverse bridge are respectively provided with a fourth through hole and a fifth through hole for plugging two electrode pins of the SPD plug-in module in the first wiring assembly and the second wiring assembly;
top surfaces of the left column and/or the right column are each provided with a second plugging locking structure suitable for cooperating with the first plugging locking structures of the SPD plug-in module to achieve locking when the two electrode pins of the SPD plug-in module are completely plugged in the first wiring assembly and the second wiring assembly;
inner side surfaces of the left column and/or the right column are each provided with a second guiding plugging structure suitable for cooperating with the first guiding plugging structures of the SPD plug-in module to guide the SPD plug-in module to be plugged in the first wiring assembly and the second wiring assembly;
the top surface of the transverse bridge is also provided with a sixth through hole for an alarm tentacle of the alarm component passing through to press against an alarm bump of the SPD plug-in module; and
when the first plugging locking structure of the SPD plug-in module are configured as horizontal grooves, the second plugging locking structures each include a slider and an elastic member which are matched and assembled; the sliders are provided with horizontal projections which can be embedded in the horizontal grooves, and the elastic members are used to limit the sliders in a locked or unlocked state in which the horizontal grooves and the horizontal protrusions are fitted or separated.

In a preferable embodiment, when the first guiding plugging structures of the SPD plug-in module are configured as two vertical grooves with the same or different heights, the second guiding plugging structures are configured as vertical guide pieces embedded into the vertical grooves;
the top surface of the transverse bridge is provided with a seventh through hole for embedding an identification pile arranged on a bottom surface of the SPD plug-in module.

In a preferable embodiment, the first wiring assembly and the second wiring assembly are each provided with an electrode extension pin, a crimping frame, and an adjusting member that are electrically connected;
the electrode extension pin is provided with a plug-in end, and the plug-in end is detachably installed with an elastic pin facing the fourth through hole or the fifth through hole; and
outer side surfaces of the left column and the right column are each provided with an eighth through hole facing an opening of the crimping frame.

In a preferable embodiment, an internal space between the lower bottom shell and the upper bottom shell is configured to uniquely define the electrode extension pins and the alarm component; top surfaces of the left column and the right column are each provided with a ninth through hole, through which the adjusting members are adjusted to freely adjust positions of the crimping frames relative to the electrode extension pins.

The present invention further provides a plug-in SPD which is composed of the SPD plug-in module and the SPD base, and the SPD plug-in module is plugged in the SPD base.

In the SPD plug-in module provided by the present invention:
The rectangular outer shell is provided with the first plugging locking structures which can cooperate with the second plugging locking structures arranged on the SPD base when the SPD plug-in module is plugged in the SPD base, so as to achieve "locking" or "unlocking" of the SPD plug-in module;
The first guiding plugging structures are also provided to cooperate with the second guiding plugging structures of the SPD base, which can guide installation personnel to plug the SPD plug-in module in the SPD base quickly and accurately, and limit the SPD plug-in module so that it cannot be shaken;
The window is also arranged to observe operation status of the SPD plug-in module;
The mis-installation-proof structure is also provided, which cooperates with the mis-installation-proof matching structure arranged on the inner shell to realize mis-installation-proof of the internal assembly;
The internal assembly fixing structure is also provided, which cooperate the internal assembly clasping structure, so that the internal assembly can be firmly installed in the rectangular outer shell under the guidance and limitation of the reverse installation-proof slot on the side wall of the internal assembly;
The anti-skid structures are also provided for easy plugging in and plugging out;
The internal assembly can be in a multi-chip tripping structure, such as an interruption turnable, which has a wide range of applications; and
In implementation, the anti-skid structures are preferably configured as rough surfaces, the first plugging locking structures are preferably configured as horizontal grooves, the first guiding plugging structures are preferably configured as vertical grooves, the internal assembly fixing structures are preferably configured as clasping holes, the internal assembly clasping structure re preferably configured as clasps, the mis-installation-proof structures are preferably configured as mis-installation-proof short protrusions, and the mis-installation-proof matching structures are preferably configured as notches; the rough surfaces, the horizontal grooves, the vertical grooves, the clasping holes, the clasps, the mis-installation-proof short protrusions, and the notches only need to be designed for the rectangular outer shell or the inner shell of the internal assembly when the mold is opened, and then they can be integrated, so that the product is simple and pretty, easy to assemble, and has a reliable structure, and costs are controlled effectively.

In the SPD base provided in the present invention:
The second plugging locking structures arranged on the upper bottom shell, after the SPD plug-in module is plugged in position, cooperates with the first plugging locking structures to achieve "locking" or "unlocking" of the SPD plug-in module, thereby preventing SPD plug-in module from loosening during transportation or use;
The second guiding plugging structures are arranged on the upper bottom shell to guide the SPD plug-in module to plug smoothly; if the first guiding plugging structures of the SPD plug-in module are configured as different vertical grooves, the second guiding plugging structures are configured as vertical guide pieces with corresponding heights to achieve reverse assembly-proof;
The upper bottom shell is correspondingly provided with a plurality of through holes for the electrode pins and the identification pile of the SPD plug-in module, external power lines, and remote communication interface passing through, thereby meeting actual needs;
Elastic pins used to receive the electrode pins of the SPD plug-in module are configured to be detachable, so that elastic pins of different materials can be replaced or elastic force of the elastic pins can be adjusted so as to meet different requirements on tightness of plug-in and plug-out;
The upper and lower bottom shells are integrally formed, and the internal space is strictly divided into multiple preset spaces; the first wiring assembly, the second wiring assembly, the alarm component (and the remote communication interface) are placed at corresponding positions of the lower bottom shell, then the upper and lower bottom shells are closed and riveting tubes are plugged to complete assembly, which has the advantages of accurate positioning, convenient assembly and reliable structure; and
The corresponding internal space and openings only need to be designed for the upper and lower bottom shells when the mold is opened, and then they can be integrated, so that the product is simple and pretty, easy to assemble, and has a reliable structure, and costs are controlled effectively.

The plug-in SPD provided by the present invention is composed of the SPD plug-in module and the SPD base provided by the present invention, which has the advantages of both SPD plug-in module and the SPD base. It is easy to assemble as a whole, reliable in structure, high in protection level, low in cost, and can be widely used for AC/DC surge protection of low voltage systems below 2000V. Therefore, the plug-in SPD has a wide range of applications and is costeffective.

### BRIEF DESCRIPTION OF DRAWINGS

FIG. 1 is a stereogram of an SPD plug-in module provided in Embodiment 1 of the present invention;
FIG. 2 is a schematic diagram showing assembly of the SPD plug-in module in FIG. 1 provided by Embodiment 1 of the present invention;
FIG. 3 is an exploded view of an internal assembly (without an interruption turnable) of the SPD plug-in module in FIG. 2 provided by Embodiment 1 of the present invention;
FIG. 4 is a schematic diagram of the specific structure of an interruption turnable of the SPD plug-in module in FIG. 2 provided by Embodiment 1 of the present invention;
FIG. 5 is a schematic diagram of the specific structure of a rectangular outer shell of the SPD plug-in module in FIG. 2 provided by Embodiment 1 of the present invention;
FIG. 6 is a stereogram of an SPD base provided in embodiment 2 of the present invention;
FIG. 7 is a preliminary exploded view of the SPD base provided in Embodiment 2 of the present invention;
FIG. 8 is a complete exploded view of the SPD base provided in Embodiment 2 of the present invention;
FIG. 9 is a schematic diagram showing a plug-in SPD provided in Embodiment 3 of the present invention, where the SPD plug-in module is being plugged in the SPD base; and
FIG. 10 is a diagram showing the plugging status of the plug-in SPD provided in Embodiment 3 of the present invention.

### Reference numerals:

| Reference numeral | Name | Reference numeral | Name | | | Reference numeral | Name |
|---|---|---|---|---|---|---|---|
| A | SPD plug-in modul e | A1 | Rectangular outer shell | | | A1-1 | Window |
| | | | | | | A1-2/ A10 | Rough surface/ anti-skid structure |
| | | | | | | A1-3/ A11 | Horizontal groove/ first plugging locking structure |
| | | | | | | A1-4/ A12 | Clasping hole/ internal assembly fixing structure |
| | | | | | | A1-5/ A13 | Vertical groove/ first guiding plugging structure |
| | | | | | | A1-6/ A14 | Mis-installation-proof short protrusion/ mis-installation-proof structure |
| | | Reference numeral | Name | Reference numeral | Name | Reference numeral | Name |
| | | A2 | Internal assembly | A2-1 | Inner shell | A2-11 | Internal assembly dividing part |
| | | | | | | A2-12 | Rectangular through hole |
| | | | | | | A2-13 | Central shaft |
| | | | | | | A2-14 | Spring pile |
| | | | | | | A2-15 | Curved top |
| | | | | | | A2-16 | Deeper portion |
| | | | | | | A2-17 | First electrode installing groove |
| | | | | | | A2-18/A21 | Clasp/internal assembly clasping |
| | | | | | | | structure |
| | | | | | | A2-19 | First through hole |
| | | | | | | A2-110 | Second electrode installing groove |
| | | | | | | A2-111 | First electrode installing hole |
| | | | | | | A2-112 | Reverse assembly-proof groove |
| | | | | | | A2-113/A23 | Identification pile/identificatio n structure |
| | | | | | | A2-114/ A22 | Notch/mi s-installation-proof matching structure |
| | | | | A2-2 | Interruption turnable | A2-21 | Central shaft hole |
| | | | | | | A2-22 | Display panel |
| | | | | | | A2-23 | Spring pile |
| | | | | | | A2-24 | Through hole in disc |
| | | | | | | A2-25 | Alarm bump |
| | | | | | | A2-26 | Arc hole in disc |
| | | | | A2-3 | MOV chip | A2-31 | chip |
| | | | | | | A2-32 | Ring electrode |
| | | | | | | A2-33 | Boss |
| | | | | | | A2-34 | Erect electrode |
| | | | | | | A2-35 | Chip electrode |
| | | | | A2-4 | Tripping electrode pin | A2-41 | Welding claw |
| | | | | | | A2-42 | Second through hole |
| | | | | | | A2-43 | First leading-out pin |
| | | | | | | A2-44 | Curved surface |
| | | | | A2-5 | Non-tripping electrode pin | A2-51 | Solder side |
| | | | | | | A2-52 | Third through hole |
| | | | | | | A2-53 | Second leading-out pin |
| | | | | A2-6 | Spring | A2 | Internal assembly |
| | | | | A2-7 | Impedance temperature line | | |

| Reference numeral | Name | Reference numeral | Name |
|---|---|---|---|
| B | SPD base | B11 | Second plugging locking structure |
| B1 | Upper bottom shell | B12 | Second guiding plugging structure |
| B2 | Lower bottom shell | B1-1 | Vertical guiding piece |
| 1 | Left column | B1-2 | Slider |
| 2 | Right column | B1-3 | Elastic member |
| 3 | Traverse bridge | B1-4 | Horizontal projection |
| 4 | First wiring assembly | B1-5 | Electrode extension pin |
| 5 | Second wiring assembly | B1-6 | Crimping frame |
| 6 | Alarm component | B1-7 | Adjusting member (screw) |
| 61 | Alarm tentacle | B1-8 | Plug-in end |
| 7 | Remote communication interface | B1-9 | Elastic pin |
| 31 | Fourth through hole | B1-10 | Riveting hole |
| 32 | Fifth through hole | B1-11 | Riveting tube |
| 33 | Sixth through hole | B1-12 | Position-limiting structure |
| 34 | Seventh through hole | B1-13 | Enclosure |
| 35 | Eighth through hole | B2-1 | Alarm switch position |
| 36 | Ninth through hole | B2-2 | Crimping frame position |
| S1 | First preset placement space | B2-3 | Elastic pin position |
| S2 | Second preset placement space | B2-4 | Follow block |
| S3 | Third preset placement space | | |

### DETAILED DESCRIPTION

Hereafter, the implementation of the present invention will be clearly and completely described with reference to accompanying drawings. Embodiments are set forth for illustrative purposes only and should not be understood as limiting the present invention. The accompanying drawings are for reference and illustrative purposes only, and do not limit the scope of protection of the present invention, because many changes can be made to the present invention without departing from the spirit and scope of the present invention.

### Embodiment 1

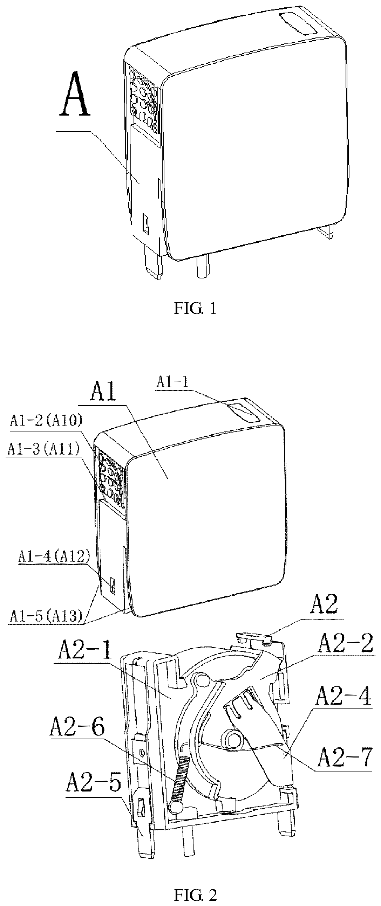

Refer to the stereogram of FIG.1 and the exploded view of FIG. 2. An SPD plug-in module A according to the embodiment of the present invention includes a rectangular outer shell A1 and an internal assembly A2 which is drawn into the rectangular outer shell A1 from the bottom opening of the rectangular outer shell A1.

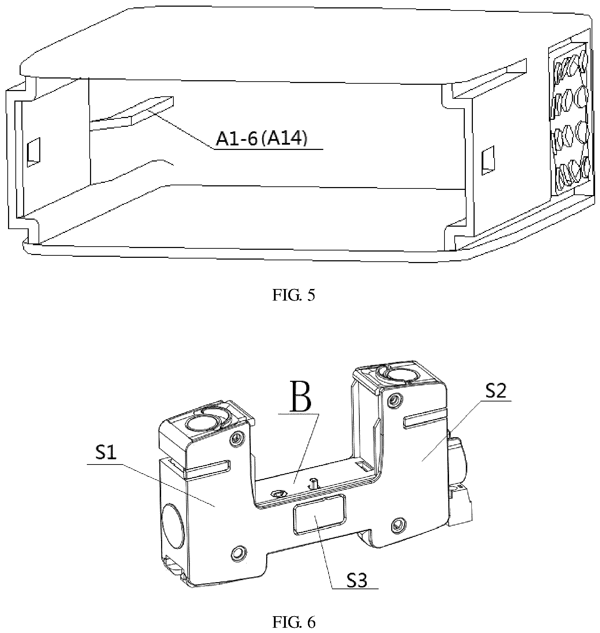

Further, as shown in Table 1 below, one end of a top surface of the rectangular outer shell A1 is provided with a window A1-1, upper portions of two side surfaces of the rectangular outer shell A1 are each provided with a rough surface A1-2 (i.e., an anti-skid structure A10), horizontal grooves A1-3 (i.e., first plugging locking structures A11) are provided below the rough surfaces A1-2, and clasping holes A1-4 (i.e., internal assembly fixing structures A12) are provided below the horizontal grooves A1-3. Four vertical grooves A1-5 (i.e., first guiding plugging structures A13) extending from bottoms of two side surfaces of the SPD plug-in module A are provided for guiding the SPD plug-in module to be plugged in a SPD base. Two vertical grooves A1-5 on one side surface have different heights and can also prevent improper plugging. As shown in FIG. 5, an inner side of one side surface of the rectangular outer shell A1 (corresponding to the anti-skid structure A10) is provided with a mis-installation-proof short protrusion A1-6 (i.e., a mis-installation-proof structure A14).

**Table 1**

| Reference numeral | Name | Reference numeral | Name | Function | Notes |
|---|---|---|---|---|---|
| A1 | Rectangular outer shell | A1-1 | Window | Indicating deterioration | Green: good chip; red: damaged chip |
| | | A1-2 | Rough surface | Symmetrical two anti-skid structures A10, for easy plugging-in and plugging-out | Increasing frictional force between hands and module |
| | | A1-3 | Horizontal groove | first plugging locking structure A11, for a slider of the base to be clasped | Cooperating with the base to achieve "locking" or "unlocking", and preventing the module and the base from separating due to vibration |
| | | A1-4 | Clasping hole | internal assembly fixing structure A12, for clasping an inner shell of the module | For clasping the clasps A2-18 on two sides of the inner shell of the module, and fixing |
| | | A1-5 | Verti cal groove | first guiding plugging structure A13, guiding plugging-in and plugging-out | With different heights, preventing reverse assembly of the outer shell and the internal assembly A2 |
| | | A1-6 | Mis-installation-proof short protrusion | Mis-installation-proof structure A14 | preventing reverse assembly of the internal assembly A2 |

Further, lower portions of two side surfaces of the inner shell A2-1 are provided with internal assembly clasping structures A21 (i.e., clasps A2-18) that match and assemble with the internal assembly fixing structures A21 (i.e., clasping holes A1-4), and a top end of one side surface of the inner shell is provided with a notch A2-114 (i.e., a mis-installation-proof matching structure A22) which matches the mis-installation-proof short protrusion A1-6. The internal assembly A2 includes an inner shell A2-1 as well as an SPD chip structure and a thermal disconnection structure fixed to the inner shell A2-1. The inner shell A2-1 is configured to be in a double-sided assembly structure separated by a middle partition, the deeper portion (occupying about 2/3 of the space) is equipped with the SPD chip structure, and the shallower portion (occupying about 1/3 of the space) is equipped with the thermal disconnection structure. An indication structure A23 is provided on a bottom surface of the internal assembly 2, which is an identification pile A2-113 installed at the bottom of the inner shell A2-1.

As shown in FIG.2, the SPD chip structure includes a non-tripping electrode pin A2-5, a tripping electrode pin A2-4, a MOV chip A2-3, and an impedance temperature line A2-7; the thermal disconnection structure includes an interruption turnable A2-2 and a spring A2-6.

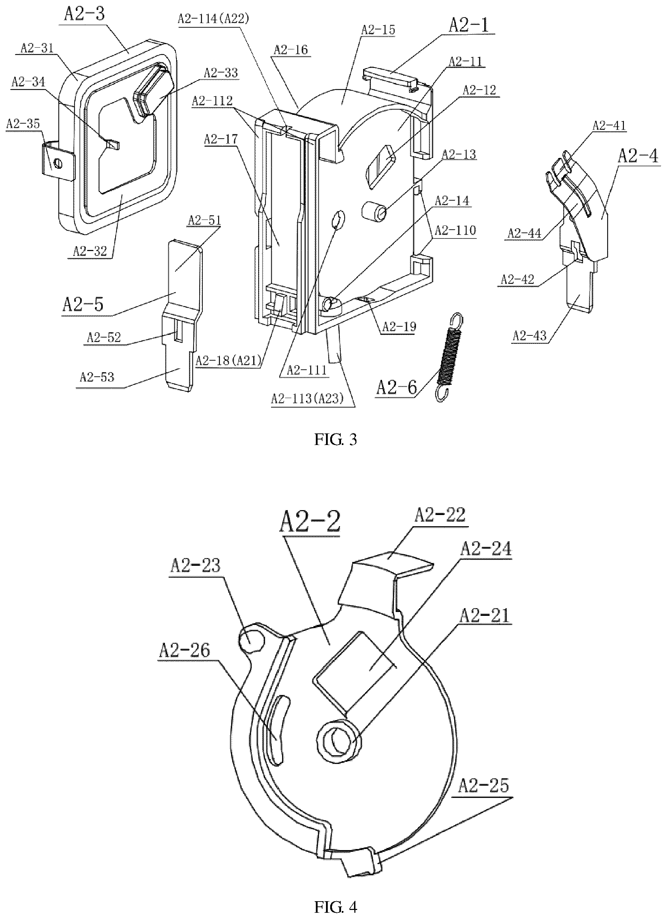

The more specific structures of the inner shell A2-1 and the MOV chip A2-3 are shown in FIG. 3, and the more specific structure of the interruption turnable A2-2 is shown in FIG.4. Names and reference numerals of the structures contained in the inner shell A2-1 are shown in Table 2 below. Names and reference numerals of the structures contained in the interruption turnable A2-2, the tripping electrode pin A2-4, and the non-tripping electrode pin A2-5 are shown in Table 3 below.

**Table 2**

| Reference numeral | Name | Reference numeral | Name | Function | Notes |
|---|---|---|---|---|---|
| A2-1 | Inner shell | A2-11 | Internal assembly dividing part | Dividing the internal assembly into a deeper portion and a shallower portion | Deeper portion used to be installed with the MOV chip, a side used to be installed with the electrode pins, and shallower portion used to be installed with the thermal disconnection structure |
| | | A2-12 | Rectangular through hole | For installing the protruding electrode of the chip | The protruding electrode of the chip protruding the dividing structure after installation to facilitate welding |
| | | A2-13 | Central shaft | Sleeved with the interruption turnable A2-2 | For rotating |
| | | A2-14 | Spring pile | Fixing one end of the spring A2-6 | |
| | | A2-15 | Curved top | Poor display swing space | |
| | | A2-16 | Deeper portion | For installing the MOV chip A2-3 | |
| | | A2-17 | First electrode mounting groove | For installing the non-tripping electrode pin A2-5 | |
| | | A2-18 | Buckle | Internal assembly clasping structure A21, passing through the second through hole A2-52, being clasped in the clasping hole A1-4 | Fixing the two electrode pins to the inner shell A2-1, the inner shell A2-1 being fixing to the rectangular outer shell A1 |
| | | A2-19 | First through hole | Interruption turnable A2-2 rotating to drive an alarm switch | |
| | | A2-110 | Second electrode mounting groove | For installing the tripping electrode pin A2-4 | |
| | | A2-111 | First electrode mounting hole | For installing erect electrode A2-34 of the chip | Passing the chip A2-31 through the hole to electrically connect with the tripping electrode pin A2-4 through the impedance temperature line A2-7 |
| | | A2-112 | Reverse assembly-proof groove | Cooperating with inner side of a top surface of the rectangular outer shell A1, optional | Preventing the internal assembly A2 from reversely installing in the rectangular outer shell A1 |
| | | A2-113 | Identification pile | Identification structure A23, preventing the SPD plug-in module from plugging in its base wrongly, optional | |
| | | A2-114 | Notch | Mis-installation-proof matching structure A22, matching with the mis-installation-proof short protrusion A1-6 | Preventing the internal assembly A2 from being assembled reversely |

**Table 3**

| Reference numeral | Name | Reference numeral | Name | Function | Notes |
|---|---|---|---|---|---|
| A2-2 | Interruption turnable | A2-21 | Central shaft hole | For rotating and positioning the turnable | |
| | | A2-22 | Display board | For displaying deterioration | Observing through the window A1-1 |
| | | A2-23 | Spring pile | For fixing another end of the spring A2-6 | |
| | | A2-24 | Turnable through hole | Primary current drainage channel | Being available for b oth AC and DC |
| | | A2-25 | Alarm bump | For triggering the alarm switch when rotating | |
| | | A2-26 | Arc hole in the turnable | Secondary current drainage channel | Being not available for AC |
| A2-3 | MOV chip | A2-31 | Chip | Nonlinear element | |
| | | A2-32 | Ring electrode | Electrode on one side of the chip A2-31 | |
| | | A2-33 | Boss | Passing through the Rectangular through hole A2-12 and the through hole in turnable A2-24, being welded with the welding claw A2-41 | Primary current drainage channel |
| | | A2-34 | Erect electrode | Passing through the erect electrode installing hole A2-111, and the arc hole in turnableA2-26 being welded with the Tripping electrode pin A2-4 with an alloy | Being not available for AC |
| | | A2-35 | Electrode of the chip | An electrode at the other end of the chip A2-31 | Electrically connected with the solder side A2-51 |
| A2-4 | Tripping electrode pin (elastic member) | A2-41 | Welding claw | Welded with the boss A2-33 | By using a cryogenic alloy |
| | | A2-42 | Second through hole | For clasping of the clasp A2-18 | |
| | | A2-43 | First leading-out pin | Electrically connected with the elastic pin at a corresponding position of the base | |
| | | A2-44 | Curved surface | Forming detachment elasticity | |
| A2-5 | Non-tripping electrode pin (elastic member) | A2-51 | Solder side | Welded with the electrode A2-35 of the chip | |
| | | A2-52 | Third through hole | For clasping of the clasp A2-18 | |
| | | A2-53 | Second leading-out pin | Electrically connected with the elastic pin at a corresponding position of the base | |
| A2-6 | Spring | | | For providing rotational power | |
| A2-7 | Impedance temperature line | | | For connecting the erect electrode A2-34 and the tripping electrode pin A2-4 | Secondary current drainage channel, providing double fuse protection |

Regarding the principle and process of double fuse protection resulted from cooperation between the SPD chip element and the thermal disconnection component in this embodiment, refer to CN patent application No.CN110601164A, "Thermal disconnection device capable of sequential interruption with rotation linkage", which made detailed description. The internal assembly A2 according to the embodiment of the present invention can also adopt other structures in this patent. Of course, the internal assembly A2 is not limited to this patent application, and other structures with the same disconnection effect are also within the protection scope of the present invention.

It should be particularly noted that the embodiment of the present invention focuses on protecting the structure of the rectangular outer shell A1 and the inner shell A2, mainly including the first plugging locking structures A11, the anti-skid structures A10, the internal assembly A12, and the first guiding plugging structures A13 arranged on the rectangular outer shell A1, as well as the inner shell A2-1, and the internal assembly clasping structure A21. In addition to the specific preferred examples of these structures shown in this embodiment, other structural designs that can play the same roles are also within the protection scope of this application.

In particular, a bottom surface of the inner shell A2-1 is provided with a first through hole A2-19 which directly faces an alarm bump A2-25 at a bottom of the thermal disconnection component. The tripping electrode pin A2-4 and the non-tripping electrode pin A2-5 are respectively provided with a second through hole A2-42 and a third through hole A2-52, clasps A2-18 arranged on the respective leading-out pins passes through the corresponding second through hole A2-42 and third through hole A2-52 and then are clasped in the corresponding clasping holes.

During installation, the SPD chip structure and the thermal disconnection structure are assembled and welded to the inner shell A2-1 to form an internal assembly A2, and then the internal assembly A2 is drawn into rectangular outer shell A1 along the reverse installation-proof slots A2-112 arranged on the left and right sides of the inner shell A2-1 and the mis-installation-proof short protrusions A1-6, so that the clasps A2-18 on the inner shell A2-1 are clasped in the clasping holes of the rectangular outer shell A1, and the notches A2-114 on the inner shell A2-1 cooperate with the mis-installation proof short protrusions A1-6. The clasps A2-18 can be configured to have a certain slope and elasticity, so that the clasps A2-18 can be plugged in more smoothly, but it cannot come out naturally.

In the SPD plug-in module A provided by the embodiment of the present invention:
The rectangular outer shell A1 is provided with the first plugging locking structures A11 which can cooperate with the second plugging locking structures arranged on the SPD base when the SPD plug-in module is plugged in the SPD base, so as to achieve "locking" or "unlocking" of the SPD plug-in module;
The first guiding plugging structures A13 are also provided to cooperate with the second guiding plugging structures of the SPD base, which can guide installation personnel to plug the SPD plug-in module in the SPD base quickly and accurately, and limit the SPD plug-in module so that it cannot be shaken;
The window A1-1 is also arranged to provide a window observe operation status of the SPD plug-in module, and changes of the internal assembly A2 (the arc top A2-15) can be observed;
The mis-installation-proof structure A14 is also provided, which cooperates with the mis-installation-proof matching structure A22 arranged on the inner shell A2-1 to realize mis-installation-proof of the internal assembly 2;
The internal assembly fixing structure A12 is also provided, which cooperates the internal assembly clasping structure A12, so that the internal assembly A2 can be firmly installed in the rectangular outer shell A1 under the guidance and limitation of the reverse installation-proof slot A2-112 on the side wall of the internal assembly;
The anti-skid structures A10 are also provided for easy plugging-in and plugging-out;
The internal assembly A2 can be in a multi-chip tripping structure, such as an interruption turnable, which has a wide range of applications; and
In implementation, the anti-skid structures A1-2 are preferably configured as rough surfaces A1-2, the first plugging locking structures are preferably configured as horizontal grooves A1-3, the first guiding plugging structures A11 are preferably configured as vertical grooves A1-5, the internal assembly fixing structures A12 are preferably configured as a clasping hole A1-4, the internal assembly clasping structures A21 are preferably configured as clasps A2-18, the mis-installation-proof structures A14 are preferably configured as mis-installation-proof short protrusions A1-6, and the mis-installation-proof matching structures A22 are preferably configured as notches A2-114; the rough surface A1-2s, the horizontal grooves A1-3, the vertical grooves A1-5, the clasping holes A1-4, the clasps A2-18, the mis-installation-proof short protrusions A1-6, and the notches A2-114 only need to be designed for the rectangular outer shell A1 or the inner shell A2-1 of the internal assembly when the mold is opened, and then they can be integrated, so that the product is simple and pretty, easy to assemble, and has a reliable structure, and costs are controlled effectively.

### Embodiment 2

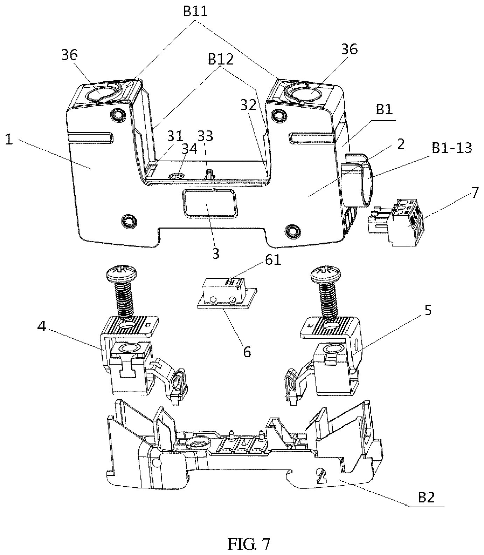

As shown in FIGs. 6-8, the present invention also provides a SPD base B which can be applied to the SPD plug-in module A, the SPD base B includes:
a lower bottom shell B2 formed integrally;
an upper bottom shell B1 formed integrally and covered on the lower bottom shell B2, including a left column 1, a right column 2 and a transverse bridge 3 connected between the left column 1 and the right column 2; wherein the left column 1, the transverse bridge 3 and the lower bottom shell B2 are defined by each other to form a first preset placement space S1; the right column 2, the transverse bridge 3 and the lower bottom shell B2 are defined by each other to form a second preset placement space S2; and the transverse bridge 3 and the lower bottom shell B2 are defined by each other to form a third preset placement space S3;
a first wiring assembly 4 installed in the first preset placement space, S1 suitable for establishing an electrical connection between an electrode pin of the SPD plug-in module A and an external power line;
a second wiring assembly 5 installed in the second preset placement space S2, suitable for establishing an electrical connection between another electrode pin of the SPD plug-in module A and an external power line; and
an alarm component 6 installed in the third preset placement space S3;
left and right sides of a top surface of the transverse bridge 3 are respectively provided with a fourth through hole 31 and a fifth through hole 32 for plugging two electrode pins of the SPD plug-in module A in the first wiring assembly 4 and the second wiring assembly 5; the top surface of the transverse bridge 3 is also provided with a sixth through hole 33 for an alarm tentacle 61 of the alarm component 6 passing through to press against an alarm bump A2-25 of the SPD plug-in module A.

top surfaces of the left column 1 and/or the right column 2 are each provided with a second plugging locking structure B11 suitable for cooperating with the first plugging locking structures A11 of the SPD plug-in module A to achieve locking when the two electrode pins of the SPD plug-in module A are completely plugged in the first wiring assembly 4 and the second wiring assembly 5;
inner side surfaces of the left column 1 and/or the right column 2 are each provided with second guiding plugging structure B12 suitable for cooperating with the first guiding plugging structures A13 of the SPD plug-in module A to guide the SPD plug-in module A to be plugged in the first wiring assembly 4 and the second wiring assembly 5;
Preferably, when the first guiding plugging structures A13 of the SPD plug-in module A are configured as two vertical grooves A1-5 with the same or different heights, the second guiding plugging structures B12 are configured as vertical guide pieces B1-1 embedded into the vertical grooves A1-5;
the top surface of the transverse bridge 3 is provided with a seventh through hole 34 for embedding an identification pile A2-113 arranged on a bottom surface of the SPD plug-in module A.

Preferably, when the first plugging locking structures A11 of the SPD plug-in module are horizontal grooves A1-3, the second plugging locking structures B11 each include a slider B1-2 and an elastic member B1-3 which are matched and assembled. The sliders B1-2 are provided with horizontal projections B1-4 which can be embedded in the horizontal grooves A1-3, and the elastic members B1-3 are used to limit the sliders B1-2 in a locked or unlocked state in which the horizontal grooves A1-3 and the horizontal protrusions B1-4 are fitted or separated.

The first wiring assembly 4 and the second wiring assembly 5 are each provided with an electrode extension pin B1-5, a crimping frame B1-6, and an adjusting member B1-7 (which is a screw in this embodiment) that are electrically connected.

The electrode extension pin B1-5 is provided with a plug-in end B1-8, and the plug-in end B1-8 is detachably installed with an elastic pin B1-9 facing the fourth through hole 31 or the fifth through hole 32.

Outer side surfaces of the left column 1 and the right column 2 are each provided with an eighth through hole 35 (including two through holes with the same nature) facing an opening of the crimping frameB1-6.

In particular, an internal space between the lower bottom shell B2 and the upper bottom shell 1 is configured to uniquely define the electrode extension pins B1-5 and the alarm component 6. Top surfaces of the left column 1 and the right column 2 are each provided with a ninth through hole 36 (including two through holes with the same nature), through which the adjusting members B1-7 (i.e., screws) are adjusted to freely adjust positions of the crimping frames B1-6 relative to the electrode extension pins B1-5.

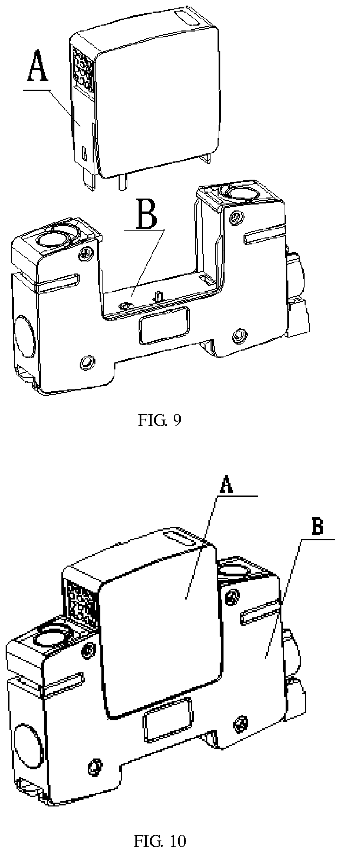

In addition to the structure specifically described above, as shown in FIG. 9, in order to fasten the elastic members B1-3 in the left column 1 and the right column 2, the elastic members B1-3 and the bottom shell B1 are adapted to the riveting tubes B1-11 and four riveting holes B1-10 are arranged in this embodiment. In order to achieve fastening between the upper bottom shell B1 and the lower bottom shell B2, the portion which is formed when the upper bottom shell B1 and the lower bottom shell B2 are closed is provided with a total of eight riveting holes B1-10, so that when the riveting tubes B1-11 are inserted into the corresponding through holes, the upper bottom shell B1 and the lower bottom shell B2 are fastened. In particular, the elastic members B1-3 are provided with position-limiting protrusions B1-12, and two clamping grooves (not shown in the figure but easy to imagine) are arranged at positions on the backs of the top surfaces of the sliders B1-2 corresponding to the position-limiting protrusions B1-12, so that the position-limiting protrusions B1-12 are embedded in the clamping grooves to realize "locking" or "unlocking".

In particular, the lower bottom shell B2 is provided with an alarm switch position B2-1 for installing the alarm switch 6, a crimping frame position B2-2 for installing the crimping frame B1-6, and an elastic pin position B2-3 for installing the plug-in end B1-8. An abutting plate B2-4 is also provided between the elastic pin position B2-3 and the crimping frame position B2-2, which is used to electrically separate the crimping frame B1-6 from the plug-in end B1-8 when installation is completed.

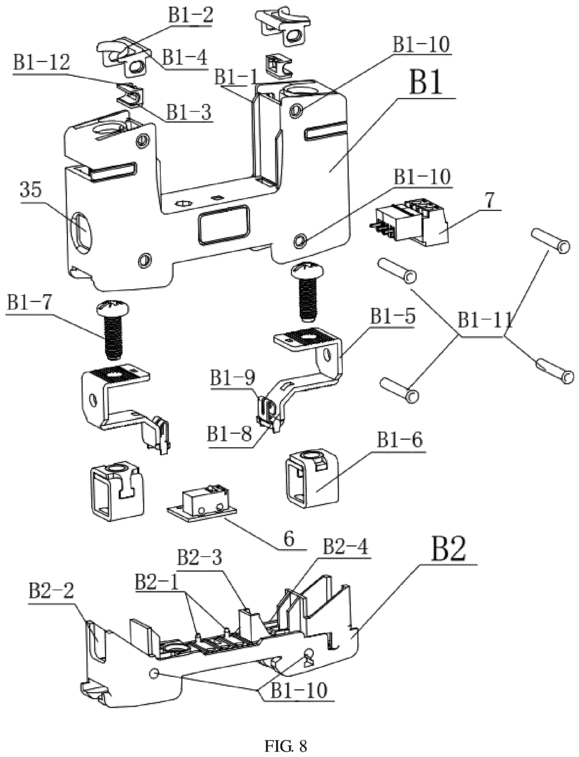

During installation, the crimping frames B1-6 and the electrode extension pins B1-5 are assembled with the adjusting members B1-7 (screws) into the first wiring assembly 4 and the second wiring assembly 5 as shown in FIG.8. The first wiring assembly 4 and the second wiring assembly 5 are placed at the corresponding positions of the lower bottom shell B2, and the upper bottom shell B1 is covered (or, the first wiring assembly 4 and the second wiring assembly 5 are placed at the corresponding positions of the upper bottom shell B1, and then the lower bottom shell B2 is covered), then the riveting tubes B1-11 are plugged in the respective riveting holes B1-10 to complete fixation. The elastic members B1-3 are placed at installation positions of the left column 1 and the right column 2, the sliders B1-2 are placed thereon, and then the riveting tubes B1-11 are plugged in the respective riveting holes B1-10 (passing through the elastic members B1-3 and the sliders B1-2) to complete fixation.

In use, under guidance of the vertical guide pieces B1-1, the two electrode pins of the SPD plug-in module are completely plugged in the elastic pins B1-9 through the fourth through hole 31 and the fifth through hole 32. When the SPD base B is connected to a circuit, the corresponding power lines are plugged in the crimping frames B1-6 corresponding to the eighth through holes 35, and the adjusting elements B1-7 are adjusted to tighten the plugged power lines. In addition, in specific implementation, enclosures B1-13 are provided outside the eighth through holes 35, which can protect access ends of the power lines from being touched.

In other embodiments, the SPD base further includes a remote communication interface 7 as shown in FIG. 8. The lower bottom shell B2 and upper bottom shell B1 are adapted to the remote communication interface 7, so that the remote communication interface 7 is fixed in an accommodating space defined by the lower bottom shell B2 and the upper bottom shell B1, and is electrically connected to the alarm component 6.

In the SPD base B provided in the present invention:
The second plugging locking structures B11 (i.e., the sliders B1-2 and the elastic members B1-3) arranged on the upper bottom shell B1, after the SPD plug-in module is plugged in position, cooperates with the first plugging locking structures (i.e., the horizontal grooves A1-3) to achieve "locking" or "unlocking" of the SPD plug-in module, thereby preventing SPD plug-in module from loosening during transportation or use;
The second guiding plugging structures B12 are arranged on the upper bottom shell B1 to guide the SPD plug-in module A to plug in smoothly; if the first guiding plugging structures A13 of the SPD plug-in module A are configured as different vertical grooves A1-5, the second guiding plugging structures are configured as vertical guide pieces B1-1 with corresponding heights to achieve reverse assembly-proof;
The upper bottom shell B1 is correspondingly provided with a plurality of through holes for the electrode pins (the first leading-out pin A2-43 and the second leading-out pin A2-53) and the identification pile of the SPD plug-in module A, external power lines, and the remote communication interface 7 passing through, thereby meeting actual needs;
Elastic pins B1-9 used to receive the electrode pins of the SPD plug-in module are configured to be detachable, so that elastic pins B1-9 of different materials can be replaced or elastic force of the elastic pins B1-9 can be adjusted so as to meet different requirements on tightness of plugging-in and plugging-out;
The upper and lower bottom shells (B1, B2) are integrally formed, and the internal space is strictly divided into multiple preset spaces (S1 to S3); the first wiring assembly 4, the second wiring assembly 5, the alarm component 6 (and the remote communication interface 7) are placed at corresponding positions of the upper bottom shell B1 (or the lower bottom shell B2), then the upper and lower bottom shells are closed and riveting tubes B1-11 are plugged in to complete assembly, which has the advantages of accurate positioning, convenient assembly and reliable structure;
The corresponding internal space and openings only need to be designed for the upper and lower bottom shells (B1, B2) when the mold is opened, and then they can be integrated, so that the product is simple and pretty, easy to assemble, and has a reliable structure, and costs are controlled effectively.

### Embodiment 3

This embodiment mainly protects a plug-in SPD, which is composed of the SPD plug-in module A provided in Embodiment 1 of the present invention and the SPD base B provided in Embodiment 2. As shown in FIGs. 9 and 10, the SPD plug-in module A is plugged in the SPD base B. The plug-in SPD protected by this embodiment provides installation positions for each functional components (the internal assembly A2, the first wiring assembly 4, the second wiring assembly 5, the alarm component 6, the remote communication interface 7, etc.), and the mis-installation-proof structures A14 and the mis-installation proof matching structures A22 cooperate, the first guiding plugging structures A13 and the second guiding plugging structures B12 cooperate, and the identification structure A23 and the seventh through hole 34 cooperate directionally. In order to ensure a reliable structure, the internal assembly fixing structures A12 and the internal assembly clamping structures A21 are also provided to cooperate with each other, and the first plugging locking structures A11 and the second plugging locking structures B11 are also provided to cooperate with each other. In this way, any part of the plug-in SPD is positioned in its own space, and no wrong installation will occur. Such a structure has the advantages of easy assembly, high reliability, anti-bumping, anti-vibration, and low cost. It can be widely used in AC and DC surge protection of low voltage systems below 2000V, and it has wide application and high cost performance.

## Claims

1. An SPD (surge protection device) plug-in module (A), wherein the SPD plug-in module (A) comprises:
a rectangular outer shell (A1) with a bottom opening; and
an internal assembly (A2) drawn into the rectangular outer shell (A1) from the bottom opening of the rectangular outer shell (A1), the internal assembly (A2) comprises an inner shell (A2-1) as well as an SPD chip structure and a thermal disconnection structure fixed to the inner shell (A2-1);
the SPD chip structure is provided with a non-tripping electrode pin (A2-5) and a tripping electrode pin (A2-4) which are respectively fixed to lower middle portions of left and right side surfaces of the inner shell (A2-1) and extend out of a bottom surface of the inner shell (A2-1);
**characterized in that** upper portions of two side surfaces of the rectangular outer shell (A1) are each provided with an anti-skid structure (A10), lower portions of the two side surfaces are each provided with an internal assembly fixing structure (A12), and an inner side of one side surface of the rectangular outer shell (A1) is provided with a mis-installation-proof structure (A14); and a first plugging locking structure (A11) and a first guiding plugging structure (A13) are provided below the anti-skid structure (A10);
lower portions of two side surfaces of the inner shell (A2-1) are each provided with an internal assembly clasping structure (A21) that matches and assembles with the internal assembly fixing structure (A12), and an upper portion of one side surface of the inner shell (A2-1) is provided with a mis-installation-proof matching structure (A22) that matches with the mis-installation-proof structure (A14);
a window (A1-1) is also embedded in a top surface of the rectangular outer shell (A1);
a bottom surface of the inner shell (A2-1) is also provided with a first through hole (A2-19) which directly faces an alarm bump (A2-25) at a bottom of the thermal disconnection structure;
the anti-skid structure (A10) is configured as a rough surface (A1-2);
the first plugging locking structure (A11) is configured as a horizontal groove (A1-3) arranged under the rough surface (A1-2);
the first guiding plugging structures (A13) extend upward from a lower portion of the two side surfaces of the rectangular outer shell (A1), and
comprise at least two vertical grooves (A1-5) with the same or different heights; a bottom surface of the internal assembly (A2) is provided with an identification structure (A23) which is configured as an identification pile (A2-113) arranged at a bottom of the inner shell (A2-1);
the internal assembly fixing structure (A12) is configured as a clasping hole (A1-4), and the internal assembly clasping structure (A21) is configured as a clasp (A2-18) which is embedded in the clasping hole (A1-4);
the mis-installation-proof structure (A14) is configured as a mis-installation-proof short protrusion (A1-6), the mis-installation-proof matching structure (A22) is configured as a notch (A2-114) that matches with the mis-installation-proof short protrusion (A1-6); and
the non-tripping electrode pin (A2-5) and the tripping electrode pin (A2-4) are respectively provided with a second through hole (A2-42) and a third through hole (A2-52), and the clasp (A2-18) passes through the second through hole (A2-42) and the third through hole (A2-52) and then is clasped in the clasping hole (A1-4).

2. An SPD base (B), wherein the SPD base (B) comprises:
a lower bottom shell (B2) formed integrally;
an upper bottom shell (B1) formed integrally and covered on the lower bottom shell (B2), the upper bottom shell (B1) comprises a left column (1),
a right column (2) and a transverse bridge (3) connected between the left column (1) and the right column (2); the left column (1), the transverse bridge (3) and the lower bottom shell (B2) being defined by each other to form a first preset placement space (S1); the right column (2), the transverse bridge (3) and the lower bottom shell (B2) being defined by each other to form a second preset placement space (S2); and the transverse bridge (3) and the lower bottom shell (B2) being defined by each other to form a third preset placement space (S3);
a first wiring assembly (4) installed in the first preset placement space (S1), suitable for establishing an electrical connection between an electrode pin of a SPD plug-in module (A) and an external power line;
a second wiring assembly (5) installed in the second preset placement space (S2), suitable for establishing an electrical connection between another electrode pin of the SPD plug-in module (A) and an external power line; and
an alarm component (6) installed in the third preset placement space (S3);
left and right sides of a top surface of the transverse bridge (3) are respectively provided with a fourth through hole (31) and a fifth through hole (32) for plugging two electrode pins of the SPD plug-in module (A) in the first wiring assembly (4) and the second wiring assembly (5);
**characterized in that** top surfaces of the left column (1) and/or the right column (2) are each provided with a second plugging locking structure (B11) suitable for cooperating with first plugging locking structures (A11) of the SPD plug-in module (A) to achieve locking when the two electrode pins of the SPD plug-in module (A) are completely plugged in the first wiring assembly (4) and the second wiring assembly (5);
inner side surfaces of the left column (1) and/or the right column (2) are each provided with a second guiding plugging structure (B12) suitable for cooperating with first guiding plugging structures (A13) of the SPD plug-in module (A) to guide the SPD plug-in module (A) to be plugged in the first wiring assembly (4) and the second wiring assembly (5);
the top surface of the transverse bridge (3) is also provided with a sixth through hole (33) for an alarm tentacle (61) of the alarm component (6) passing through to press against an alarm bump (A2-25) of the SPD plug-in module (A); and
when the first plugging locking structure (A11) of the SPD plug-in module (A) are configured as horizontal grooves (A1-3), the second plugging locking structures (B11) each comprise a slider (B1-2) and an elastic member (B1-3) which are matched and assembled; the sliders (B1-2) are provided with horizontal projections (B1-4) which can be embedded in the horizontal grooves (A1-3), and the elastic members (B1-3) are used to limit the sliders (B1-2) in a locked or unlocked state in which the horizontal grooves (A1-3) and the horizontal protrusions are fitted or separated.

3. The SPD base (B) of claim 2, **characterized in that** when the first guiding plugging structures (A13) of the SPD plug-in module (A) are configured as two vertical grooves (A1-5) with the same or different heights, the second guiding plugging structures (B12) are configured as vertical guide pieces embedded into the vertical grooves (A1-5);
the top surface of the transverse bridge (3) is provided with a seventh through hole (34) for embedding an identification pile (A2-113) arranged on a bottom surface of the SPD plug-in module (A).

4. The SPD base (B) of claim 3, **characterized in that** the first wiring assembly (4) and the second wiring assembly (5) are each provided with an electrode extension pin (B1-5), a crimping frame (B1-6), and an adjusting member (B1-7) that are electrically connected;
the electrode extension pin (B1-5) is provided with a plug-in end (B1-8), and the plug-in end (B1-8) is detachably installed with an elastic pin (B1-9) facing the fourth through hole (31) or the fifth through hole (32); and
outer side surfaces of the left column (1) and the right column (2) are each provided with an eighth through hole (35) facing an opening of the crimping frame (B1-6).

5. The SPD base (B) of claim 4, **characterized in that** an internal space between the lower bottom shell (B2) and the upper bottom shell (B1) is configured to uniquely define the electrode extension pins (B1-5) and the alarm component (6); top surfaces of the left column (1) and the right column (2) are each provided with a ninth through hole (36), through which the adjusting members (B1-7) are adjusted to freely adjust positions of the crimping frames (B1-6) relative to the electrode extension pins (B 1-5).

6. A plug-in SPD, **characterized in that** the plug-in SPD is composed of the SPD plug-in module (A) of claim 1 and the SPD base (B) of any one of claims 2 to 5, and the SPD plug-in module (A) is plugged in the SPD base (B).

## Patentansprüche

1. SPD(Überspannungsschutzvorrichtungs)-Einsteckmodul (A), wobei das SPD-Einsteckmodul (A) umfasst:
eine rechteckige Außenhülle (A1) mit einer Bodenöffnung; und
eine durch die Bodenöffnung der rechteckigen Außenhülle (A1) in die rechteckige Außenhülle (A1) gezogene interne Baugruppe (A2), wobei die interne Baugruppe eine Innenhülle (A2-1) sowie eine SPD-Chipstruktur und eine an der Innenhülle (A2-1) fixierte Wärmetrennungsstruktur umfasst;
wobei die SPD-Chipstruktur mit einem Nichtauslöse-Elektrodenstift (A2-5) und einem Auslöse-Elektrodenstift (A2-4) versehen ist, die jeweils an unteren Mittelabschnitten der linken und rechten Seitenflächen der Innenhülle (A2-1) fixiert sind und sich aus einer Bodenfläche der Innenhülle (A2-1) erstrecken;
**dadurch gekennzeichnet, dass** obere Abschnitte von zwei Seitenflächen der rechteckigen Außenhülle (A1) jeweils mit einer Gleitschutzstruktur (A10) versehen sind, untere Abschnitte der zwei Seitenflächen jeweils mit einer internen Baugruppenfixierungsstruktur (A12) versehen sind und eine Innenseite einer Seitenfläche der rechteckigen Außenhülle (A1) mit einer einbausicheren Struktur (A14) versehen ist; und eine erste Steckverriegelungsstruktur (A11) und eine erste Führungssteckstruktur (A13) unter der Gleitschutzstruktur (A10) vorgesehen sind;
untere Abschnitte von zwei Seitenflächen der Innenhülle (A2-1) jeweils mit einer internen Baugruppenverklammerungsstruktur (A21) versehen sind, die zur internen Baugruppenfixierungsstruktur (A12) passt und mit dieser zusammengesetzt wird, und ein oberer Abschnitt einer Seitenfläche der Innenhülle (A2-1) mit einer einbausicheren Passstruktur (A22) versehen ist, der zur einbausicheren Struktur (A14) passt;
ein Fenster (A1-1) auch in einer oberen Oberfläche der rechteckigen Außenhülle (A1) eingebettet ist;
eine Bodenfläche der Innenhülle (A2-1) mit einer ersten Durchbohrung (A2-19) versehen ist, die direkt einem Alarmhöcker (A2-25) an einem Boden der Wärmetrennungsstruktur gegenüberliegt;
die Gleitschutzstruktur (A10) als eine raue Oberfläche (A1-2) ausgelegt ist;
die erste Steckverriegelungsstruktur (A11) als eine horizontale Nut (A1-3) ausgelegt ist, die unter der rauen Oberfläche (A1-2) angeordnet ist;
die ersten Führungssteckstrukturen (A13) von einem unteren Abschnitt der zwei Seitenflächen der rechteckigen Außenhülle (A1) nach oben verlaufen und mindestens zwei vertikale Nuten (A1-5) mit den gleichen oder unterschiedlichen Höhen umfassen; eine Bodenfläche der internen Baugruppe (A2) mit einer Identifikationsstruktur (A23) versehen ist, die als eine Identifikationssäule (A2-113) ausgelegt ist und an einem Boden der Innenhülle (A2-1) angeordnet ist;
die interne Baugruppenfixierungsstruktur (A12) als ein Schnallenloch (A1-4) ausgelegt ist und die interne Baugruppenverklammerungsstruktur (A21) als eine Schnalle (A2-18) ausgelegt ist, die im Schnallenloch (A1-4) eingebettet ist;
die einbausichere Struktur (A14) als ein kurzer einbausicherer Vorsprung (A1-6) ausgelegt ist, die einbausichere Passstruktur (A22) als eine Kerbe (A2-114) ausgelegt ist, die zum kurzen einbausicheren Vorsprung (A1-6) passt; und
der Nichtauslöse-Elektrodenstift (A2-5) und der Auslöse-Elektrodenstift (A2-4) jeweils mit einer zweiten Durchbohrung (A2-42) und einer dritten Durchbohrung (A2-52) versehen sind und die Schnalle (A2-18) durch die zweite Durchbohrung (A2-42) und die dritte Durchbohrung (A2-52) verläuft und dann im Schnallenloch (A1-4) ergriffen wird.

2. SPD-Sockel (B), wobei der SPD-Sockel (B) umfasst:
eine integral geformte untere Bodenhülle (B2);
eine obere Bodenhülle (B1), die an der unteren Bodenhülle (B2) integral geformt und bedeckt ist, wobei die obere Bodenhülle (B1) eine linke Säule (1), eine rechte Säule (2) und eine Querbrücke (3) umfasst, die zwischen der linken Säule (1) und der rechten Säule (2) verbunden ist; wobei sich die linke Säule (1), die Querbrücke (3) und die untere Bodenhülle (B2) gegenseitig definieren, sodass sie einen ersten vorgegebenen Platzierungsraum (S1) bilden; wobei sich die rechte Säule (2), die Querbrücke (3) und die untere Bodenhülle (B2) gegenseitig definieren, sodass sie einen zweiten vorgegebenen Platzierungsraum (S2) bilden; und sich die Querbrücke (3) und die untere Bodenhülle (B2) gegenseitig definieren, sodass sie einen dritten vorgegebenen Platzierungsraum (S3) bilden;
eine erste Verdrahtungsanordnung (4) im ersten vorgegebenen Platzierungsraum (S1) installiert ist, die zum Einrichten einer elektrischen Verbindung zwischen einem Elektrodenstift eines SPD-Einsteckmoduls (A) und einer externen Stromleitung geeignet ist;
eine zweite Verdrahtungsanordnung (5) im zweiten vorgegebenen Platzierungsraum (S2) installiert ist, die zum Einrichten einer elektrischen Verbindung zwischen einem anderen Elektrodenstift des SPD-Einsteckmoduls (A) und einer externen Stromleitung geeignet ist; und
eine Alarmkomponente (6), die im dritten vorgegebenen Platzierungsraum (S3) installiert ist; eine linke und eine rechte Seite einer oberen Oberfläche der Querbrücke (3) jeweils mit einer vierten Durchbohrung (31) und einer fünften Durchbohrung (32) zum Einstecken zweier Elektrodenstifte des SPD-Einsteckmoduls (A) in die erste Verdrahtungsanordnung (4) und die zweite Verdrahtungsanordnung (5) versehen sind;
**dadurch gekennzeichnet, dass** obere Oberflächen der linken Säule (1) und/oder der rechten Säule (2) jeweils mit einer zweiten Steckverriegelungsstruktur (B11) versehen sind, die zum Zusammenwirken mit ersten Steckverriegelungsstrukturen (A11) des SPD-Einsteckmoduls (A) geeignet sind, um eine Verriegelung zu erreichen, wenn die zwei Elektrodenstifte des SPD-Einsteckmoduls (A) vollständig in die erste Verdrahtungsanordnung (4) und die zweite Verdrahtungsanordnung (5) gesteckt sind;
innere Seitenflächen der linken Säule (1) und/oder der rechten Säule (2) jeweils mit einer zweiten Steckverriegelungsstruktur (B11) versehen sind, die zum Zusammenwirken mit ersten Führungssteckstrukturen (A13) des SPD-Einsteckmoduls (A) geeignet sind, um das SPD-Einsteckmodul (A) zu führen, das in die erste Verdrahtungsanordnung (4) und die zweite Verdrahtungsanordnung (5) einzustecken ist;
die obere Oberfläche der Querbrücke (3) auch mit einer sechsten Durchbohrung (33) versehen ist, sodass ein hindurchlaufender Alarmfühler (61) der Alarmkomponente (6) gegen einen Alarmhöcker (A2-25) des SPD-Einsteckmoduls (A) drückt; und
wenn die erste Steckverriegelungsstruktur (A11) des SPD-Einsteckmoduls (A) als horizontale Nuten (A1-3) ausgelegt sind, die zweiten Steckverriegelungsstrukturen (B11) jeweils einen Schieber (B1-2) und ein elastisches Element (B1-3) umfassen, die aneinander angepasst und zusammengesetzt sind; die Schieber (B1-2) mit horizontalen Vorsprüngen (B1-4) versehen sind, die in die horizontalen Nuten (AI-3) eingebettet werden können, und die elastischen Elemente (B1-3) verwendet werden, um die Schieber (B1-2) auf einen verriegelten oder entriegelten Zustand zu beschränken, in dem die horizontalen Nuten (A1-3) und die horizontalen Vorsprünge eingepasst oder getrennt sind.

3. SPD-Sockel (B) nach Anspruch 2, **dadurch gekennzeichnet, dass**, wenn die ersten Führungssteckstrukturen (A13) des SPD-Einsteckmoduls (A) als zwei vertikale Nuten (A1-5) mit den gleichen oder unterschiedlichen Höhen ausgelegt sind, die zweiten Führungssteckstrukturen (B12) als vertikale Führungsteile ausgelegt sind, die in die vertikalen Nuten (A1-5) eingebettet sind;
die obere Oberfläche der Querbrücke (3) mit einer siebenten Durchbohrung (34) zum Einbetten einer Identifikationssäule (A2-113) versehen ist, die auf einer Bodenfläche des SPD-Einsteckmoduls (A) angeordnet ist.

4. SPD-Sockel (B) nach Anspruch 3, **dadurch gekennzeichnet, dass** die erste Verdrahtungsanordnung (4) und die zweite Verdrahtungsanordnung (5) jeweils mit einem Elektrodenverlängerungsstift (B1-5), einem Crimprahmen (B1-6) und einem Einstellelement (B1-7) versehen sind, die elektrisch verbunden sind;
der Elektrodenverlängerungsstift (B1-5) mit einem Einsteckende (B1-8) versehen ist und das Einsteckende (B1-8) abnehmbar mit einem elastischen Stift (B1-9) installiert ist, der der vierten Durchbohrung (31) oder der fünften Durchbohrung (32) zugewandt ist; und
äußere Seitenflächen der linken Säule (1) und der rechten Säule (2) jeweils mit einer achten Durchbohrung (35) versehen sind, die einer Öffnung des Crimprahmens (B1-6) zugewandt ist.

5. SPD-Sockel (B) nach Anspruch 4, **dadurch gekennzeichnet, dass** ein interner Raum zwischen der unteren Bodenhülle (B2) und der oberen Bodenhülle (B1) ausgelegt ist, die Elektrodenverlängerungsstifte (B1-5) und die Alarmkomponente (6) eindeutig zu definieren; obere Oberflächen der linken Säule (1) und der rechten Säule (2) jeweils mit einer neunten Durchbohrung (36) versehen sind, durch die die Einstellelemente (B1-7) eingestellt werden, um Positionen der Crimprahmen (B1-6) relativ zu den Elektrodenverlängerungsstiften (B1-5) frei anzupassen.

6. Einsteck-SPD, **dadurch gekennzeichnet, dass** die Einsteck-SPD aus dem SPD-Einsteckmodul (A) nach Anspruch 1 und dem SPD-Sockel (B) nach einem der Ansprüche 2 bis 5 besteht und das SPD-Einsteckmodul (A) in den SPD-Sockel (B) eingesteckt ist.

## Revendications

1. Module enfichable de DPS (dispositif de protection contre les surtensions) (A), dans lequel le module enfichable de DPS (A) comprend :
une coque externe rectangulaire (A1) avec une ouverture inférieure ; et
un ensemble interne (A2) tiré dans la coque externe rectangulaire (A1) depuis l'ouverture inférieure de la coque externe rectangulaire (A1), l'ensemble interne (A2) comprend une coque interne (A2-1) ainsi qu'une structure de puce de DPS et une structure de déconnexion thermique fixée à la coque interne (A2-1) ;
la structure de puce de DPS est pourvue d'une broche d'électrode sans déclenchement (A2-5) et d'une broche d'électrode à déclenchement (A2-4) qui sont respectivement fixées à des portions médianes inférieures de surfaces latérales gauche et droite de la coque interne (A2-1) et s'étendent hors d'une surface inférieure de la coque interne (A2-1) ;
**caractérisé en ce que** des portions supérieures de deux surfaces latérales de la coque externe rectangulaire (A1) sont chacune pourvues d'une structure antidérapante (A10), des portions inférieures des deux surfaces latérales sont chacune pourvues d'une structure de fixation d'ensemble interne (A12), et un côté interne d'une surface latérale de la coque externe rectangulaire (A1) est pourvu d'une structure à l'épreuve d'une mauvaise installation (A14) ; et une première structure de verrouillage de branchement (A11) et une première structure de branchement de guidage (A13) sont prévues en dessous de la structure antidérapante (A10) ;
des portions inférieures de deux surfaces latérales de la coque interne (A2-1) sont chacune pourvues d'une structure d'attache d'ensemble interne (A21) qui correspond à et s'assemble avec la structure de fixation d'ensemble interne (A12), et une portion supérieure d'une surface latérale de la coque interne (A2-1) est pourvue d'une structure correspondante à l'épreuve d'une mauvaise installation (A22) qui correspond à la structure à l'épreuve d'une mauvaise installation (A14) ;
une fenêtre (A1-1) est également encastrée dans une surface supérieure de la coque externe rectangulaire (A1) ;
une surface inférieure de la coque interne (A2-1) est également pourvue d'un premier orifice traversant (A2-19) qui est directement tourné vers une bosse d'alarme (A2-25) au niveau d'une partie inférieure de la structure de déconnexion thermique ;
la structure antidérapante (A10) est configurée en tant que surface rugueuse (A1-2) ;
la première structure de verrouillage de branchement (A11) est configurée en tant que rainure horizontale (A1-3) agencée sous la surface rugueuse (A1-2) ;
les premières structures de branchement de guidage (A13) s'étendent vers le haut depuis une portion inférieure des deux surfaces latérales de la coque externe rectangulaire (A1), et comprennent au moins deux rainures verticales (A1-5) avec les mêmes ou différentes hauteurs ; une surface inférieure de l'ensemble interne (A2) est pourvue d'une structure d'identification (A23) qui est configurée en tant que pilot d'identification (A2-113) agencé au niveau d'une partie inférieure de la coque interne (A2-1) ;
la structure de fixation d'ensemble interne (A12) est configurée en tant qu'orifice d'attache (A1-4), et la structure d'attache d'ensemble interne (A21) est configurée en tant qu'attache (A2-18) qui est encastrée dans l'orifice d'attache (A1-4) ;
la structure à l'épreuve d'une mauvaise installation (A14) est configurée en tant que saillie courte à l'épreuve d'une mauvaise installation (A1-6), la structure correspondante à l'épreuve d'une mauvaise installation (A22) est configurée en tant qu'encoche (A2-114) qui correspond à la saillie courte à l'épreuve d'une mauvaise installation (A1-6) ; et
la broche d'électrode sans enclenchement (A2-5) et la broche d'électrode à enclenchement (A2-4) sont respectivement pourvues d'un deuxième orifice traversant (A2-42) et d'un troisième orifice traversant (A2-52), et l'attache (A2-18) passe à travers le deuxième orifice traversant (A2-42) et le troisième orifice traversant (A2-52), puis est attachée dans l'orifice d'attache (A1-4).

2. Base de DPS (B), dans laquelle la base de DPS (B) comprend :
une coque de fond inférieure (B2) formée de manière intégrale ;
une coque de fond supérieure (B1) formée de manière intégrale et recouverte sur la coque de fond inférieure (B2), la coque de fond supérieure (B1) comprend une colonne gauche (1), une colonne droite (2), et un pont transversal (3) connecté entre la colonne gauche (1) et la colonne droite (2) ; la colonne gauche (1), le pont transversal (3) et la coque de fond inférieure (B2) étant définis l'un par l'autre pour former un premier espace de placement prédéfini (S1) ; la colonne droite (2), le pont transversal (3) et la coque de fond inférieure (B2) étant définis l'un par l'autre pour former un deuxième espace de placement prédéfini (S2) ; et le pont transversal (3) et la coque de fond inférieure (B2) étant définis l'un par l'autre pour former un troisième espace de placement prédéfini (S3) ;
un premier ensemble de câblage (4) installé dans le premier espace de placement prédéfini (S1), convenant à l'établissement d'une connexion électrique entre une broche d'électrode d'un module enfichable de DPS (A) et une ligne électrique externe ;
un second ensemble de câblage (5) installé dans le deuxième espace de placement prédéfini (S2), convenant à l'établissement d'une connexion électrique entre une autre broche d'électrode du module enfichable de DPS (A) et une ligne électrique externe ; et
un composant d'alarme (6) installé dans le troisième espace de placement prédéfini (S3) ;
des côtés gauche et droit d'une surface supérieure du pont transversal (3) sont respectivement pourvus d'un quatrième orifice traversant (31) et d'un cinquième orifice traversant (32) pour brancher deux broches d'électrode du module enfichable de DPS (A) dans le premier ensemble de câblage (4) et le second ensemble de câblage (5) ;
**caractérisée en ce que** des surfaces supérieures de la colonne gauche (1) et/ou la colonne droite (2) sont chacune pourvues d'une seconde structure de verrouillage de branchement (B11) convenant à la coopération avec des premières structures de verrouillage de branchement (A11) du module enfichable de DPS (A) pour obtenir un verrouillage lorsque les deux broches d'électrode du module enfichable de DPS (A) sont complètement branchées dans le premier ensemble de câblage (4) et le second ensemble de câblage (5) ;
des surfaces latérales internes de la colonne gauche (1) et/ou la colonne droite (2) sont chacune pourvues d'une seconde structure de branchement de guidage (B12) convenant à la coopération avec des premières structures de branchement de guidage (A13) du module enfichable de DPS (A) pour guider le module enfichable de DPS (A) devant être branché dans le premier ensemble de câblage (4) et le second ensemble de câblage (5) ;
la surface supérieure du pont transversal (3) est également pourvue d'un sixième orifice traversant (33) pour une tentacule d'alarme (61) du composant d'alarme (6) passant à travers pour appuyer sur une bosse d'alarme (A2-25) du module enfichable de DPS (A) ; et
lorsque les premières structures de verrouillage de branchement (A11) du module enfichable de DPS (A) sont configurées en tant que rainures horizontales (A1-3), les secondes structures de verrouillage de branchement (B11) comprennent chacune un coulisseau (B1-2) et un élément élastique (B1-3) qui sont mis en correspondance et assemblés ; les coulisseaux (B1-2) sont pourvus de saillies horizontales (B1-4) qui peuvent être encastrées dans les rainures horizontales (A1-3), et les éléments élastiques (B1-3) sont utilisés pour limiter les coulisseaux (B1-2) dans un état verrouillé ou déverrouillé dans lequel les rainures horizontales (A1-3) et les saillies horizontales sont ajustées ou séparées.

3. Base de DPS (B) selon la revendication 2, **caractérisée en ce que** lorsque les premières structures de branchement de guidage (A13) du module enfichable de DPS (A) sont configurées en tant que deux rainures verticales (A1-5) avec les mêmes ou différentes hauteurs, les secondes structures de branchement de guidage (B12) sont configurées en tant que pièces de guide verticales encastrées dans les rainures verticales (A1-5) ;
la surface supérieure du pont transversal (3) est pourvue d'un septième orifice traversant (34) pour encastrer un pilot d'identification (A2-113) agencé sur une surface inférieure du module enfichable de DPS (A).

4. Base de DPS (B) selon la revendication 3, **caractérisée en ce que** le premier ensemble de câblage (4) et le second ensemble de câblage (5) sont chacun pourvus d'une broche de prolongement d'électrode (B1-5), d'un cadre de sertissage (B1-6) et d'un élément d'ajustement (B1-7) qui sont électriquement connectés ;
la broche de prolongement d'électrode (B1-5) est pourvue d'une extrémité enfichable (B1-8), et l'extrémité enfichable (B1-8) est installée de manière amovible avec une broche élastique (B1-9) tournée vers le quatrième orifice traversant (31) ou le cinquième orifice traversant (32) ; et
des surfaces latérales externes de la colonne gauche (1) et la colonne droite (2) sont chacune pourvues d'un huitième orifice traversant (35) tourné vers une ouverture du cadre de sertissage (B1-6).

5. Base de DPS (B) selon la revendication 4, **caractérisée en ce qu'**un espace interne entre la coque de fond inférieure (B2) et la coque de fond supérieure (B1) est configuré pour définir uniquement les broches de prolongement d'électrode (B1-5) et le composant d'alarme (6) ; des surfaces supérieures de la colonne gauche (1) et la colonne droite (2) sont chacune pourvues d'un neuvième orifice traversant (36) à travers lequel les éléments d'ajustement (B1-7) sont ajustés pour ajuster librement des positions des cadres de sertissage (B1-6) par rapport aux broches de prolongement d'électrode (B1-5).

6. DPS enfichable, **caractérisé en ce que** le DPS enfichable est composé du module enfichable de DPS (A) selon la revendication 1 et de la base de DPS (B) selon l'une quelconque des revendications 2 à 5, et le module enfichable de DPS (A) est branché dans la base de DPS (B).
